# EUROPÄISCHE PATENTANMELDUNG

(11) **EP 2 354 678 A2**
(43) Veröffentlichungstag der Anmeldung: **10.08.2011**
(21) Anmeldenummer: 10014868.3
(22) Anmeldetag: 23.11.2010
(51) Int. Cl.: F24D 11/00, F24D 19/10

(54) **Heizungsanlage, umfassend einen Warmwasserspeicher und eine Heizeinrichtung (Heizkessel) sowie eine solarthermische Anlage**

(30) Priorität: 02.02.2010 DE 102010006475
(71) Anmelder: Reuter Messtechnik GmbH, 37290 Meißner (DE)
(72) Erfinder: Reuter, Wolfgang, 37290 Meissner/Weidenhausen (DE)
(74) Vertreter: Walther, Walther & Hinz GbR

(57) **Zusammenfassung**

Gegenstand der Erfindung ist eine Heizungsanlage, umfassend einen Warmwasserspeicher 104, eine Heizeinrichtung sowie eine solarthermische Anlage (100), wobei die solarthermische Anlage (100) mit dem Warmwasserspeicher (104) durch einen Speicherwärmetauscher (103) in Verbindung steht, und wobei die solarthermische Anlage (100) des Weiteren durch einen solarthermischen Wärmetauscher (110) mit mindestens einem Raumwärmetauscher, z. B. einer Fußbodenheizung, der Heizungsanlage in Verbindung steht.

## Beschreibung

Die Erfindung betrifft eine Heizungsanlage, umfassend einen Warmwasserspeicher und eine Heizeinrichtung sowie eine solarthermische Anlage.

Solche Anlagen sind aus dem Stand der Technik hinreichend bekannt; sie dienen, kombiniert mit einer solarthermischen Anlage, hauptsächlich der Beheizung von Gebäuden. Die solarthermische Anlage befindet sich üblicherweise auf dem Dach eines Gebäudes und ist durch Vor- und Rücklauf über einen Wärmetauscher mit einem Warmwasserspeicher verbunden. Das bedeutet, dass durch die solarthermische Anlage das Wasser im Warmwasserspeicher erwärmt wird. Der Warmwasserspeicher besitzt darüber hinaus einen weiteren Wärmetauscher, der zur Heizungsunterstützung über diesen Wärmetauscher eine bestimmte Wärmemenge dem Warmwasserspeicher entnimmt und den Raumwärmetauschern, also beispielsweise einer Fußbodenheizung, zuführt.

Ist die durch die solarthermische Anlage in den Warmwasserspeicher abgegebene Wärmemenge nicht ausreichend, so ist für diesen Fall in dem Wärmespeicher ein weiterer Wärmetauscher angeordnet, der beispielsweise durch einen konventionellen Heizkessel dafür sorgt, dass durch diesen Wärmetauscher das Wasser im Warmwasserspeicher eine bestimmte Temperatur nicht unterschreitet.

Wie bereits zuvor erläutert, steht die solarthermische Anlage durch einen Wärmetauscher unmittelbar mit dem Warmwasserspeicher in Verbindung. Die Mindesttemperatur des Warmwasserspeichers beträgt üblicherweise zwischen 55° und 60°C. Das heißt, dass die solarthermische Anlage erst dann mit der Wärmeabgabe an das im Warmwasserspeicher befindliche Medium beginnt, wenn das Medium, z. B. Wasser, in der solarthermischen Anlage die Ist-Temperatur für das Wasser im Warmwasserspeicher überschreitet. Dies ist im Zweifelsfall erst dann der Fall, wenn die Temperatur des Heizmediums in der solarthermischen Anlage 50, 60 oder sogar noch mehr Grad erreicht hat. Dies ist unwirtschaftlich.

Häufig genug sind solarthermische Anlagen in Verbindung mit Heizungsanlagen in Gebäuden eingebaut, die über eine Fußbodenheizung verfügen. Der Vorteil einer Fußbodenheizung liegt darin, dass die Vorlauftemperatur gegenüber z. B. konventionellen Plattenheizkörpern wesentlich geringer gewählt werden kann. Die Vorlauftemperatur bei einer Fußbodenheizung liegt bei maximal 40°C, üblicherweise jedoch zwischen 25 und 35°C.

Wie oben bereits erläutert, ist es beim Stand der Technik so, dass die Heizleistung der solarthermischen Anlage erst dann abgerufen wird, wenn die Temperatur des Heizmediums in der solarthermischen Anlage die Ist-Temperatur im Warmwasserspeicher übersteigt. Nach der Erfindung ist nun vorgesehen, dass die solarthermische Anlage mit dem Warmwasserspeicher durch einen Speicherwärmetauscher in Verbindung steht, und dass die solarthermische Anlage des Weiteren durch einen Wärmetauscher (solarthermischen Wärmetauscher) mit dem mindestens einen Raumwärmetauscher, z. B. einer Fußbodenheizung, der Heizungsanlage in Verbindung steht. Dadurch, dass die solarthermische Anlage nicht nur mit dem Warmwasserspeicher in Verbindung steht, sondern darüber hinaus auch über einen weiteren Wärmetauscher, nämlich dem zuvor erwähnten solarthermischen Wärmetauscher, mit beispielsweise der Fußbodenheizung eines Gebäudes, besteht nunmehr die Möglichkeit, bereits in den frühen Morgenstunden, oder wenn der Speicher voll geladen ist, oder in den Nachmittagsstunden, wenn die solarthermische Anlage nicht ihre volle Leistung entwickelt hat, bereits dieses erwärmte Heizmedium, z. B. Wasser, dem solarthermischen Wärmetauscher zuzuführen, um auf diese Weise zumindest die Heizungsanlage zu unterstützen. Dies insofern, als der solarthermische Wärmetauscher mit dem Rücklauf der Heizungsanlage in Verbindung steht, was bedeutet, dass die durch die solarthermische Anlage durch solarthermischen Wärmetauscher an das Heizmedium der Heizungsanlage abgegebene Wärmemenge die abgerufene Leistung des Heizkessels zur Erwärmung des Heizmediums in der Heizungsanlage unter Umständen wesentlich vermindert, insbesondere dann, wenn die Vorlauftemperatur, z. B. für die Fußbodenheizung, relativ gering ist. In jedem Fall ergibt sich eine Ersparnis gegenüber dem Stand der Technik insofern, dass immer dann, wenn die solarthermische Anlage Wärme erzeugt, die nicht im Warmwasserspeicher genutzt werden kann, diese für die Heizungsunterstützung genutzt wird.

Nach einem weiteren Merkmal der Erfindung weist der Warmwasserspeicher einen zweiten Wärmetauscher auf, der mit der Heizungsanlage gekoppelt ist, d. h., dass für den Fall, dass der Warmwasserspeicher Heizleistung benötigt, die nicht durch die solarthermische Anlage zur Verfügung gestellt werden kann, durch den Heizkessel der Heizungsanlage das Wasser im Warmwasserspeicher durch diesen im Warmwasserspeicher befindlichen Wärmetauscher auf die entsprechende Temperatur gebracht wird.

Des Weiteren ist vorteilhaft vorgesehen, dass der solarthermische Wärmetauscher zwischen solarthermischer Anlage und dem Raumwärmetauscher bzw. der Heizungsanlage als Plattenwärmetauscher ausgebildet ist, wobei der Plattenwärmetauscher zwei getrennte Kammern zum Wärmeaustausch aufweist, so dass das Heizmedium der Heizungsanlage getrennt vom Heizmedium der solarthermischen Anlage geführt ist. Dies hat den Vorteil, dass die solarthermische Anlage mit einem zur Heizungsanlage unterschiedlichen Heizmedium, z. B. Frostschutzmedium, betrieben werden kann.

Nach einem weiteren Merkmal der Erfindung ist vorgesehen, dass der solarthermische Wärmetauscher einerseits in dem Vorlauf in der solarthermischen Anlage angeordnet ist, und andererseits der solarthermische Wärmetauscher in dem Rücklauf der Heizungsanlage, also der Leitung zum Heizkessel eingekoppelt ist. Weiterhin ist vorgesehen, dass der Vorlauf zum Speicherwärmetauscher, der in dem Vorlauf der solarthermischen Anlage eingekuppelt ist, und zum solarthermischen Wärmetauscher absperrbar ist.

Dies dient der wahlweisen Zufuhr des Heizmediums entweder zum Warmwasserspeicher oder zum solarthermischen Wärmetauscher für die Raumheizung.

Gegenstand der Erfindung ist auch ein Steuerungsverfahren für eine Heizungsanlage der zuvor beschriebenen Art, wobei vorgesehen ist, dass bei einer Vorlauftemperatur der solarthermischen Anlage, die unterhalb der Ist-Temperatur des Wärmespeichers liegt, aber oberhalb der Temperatur im Rücklauf der Heizungsanlage liegt, der Zulauf zum Warmwasserspeicher abgesperrt wird, so dass der solarthermische Wärmetauscher mit dem Heizmedium aus der solarthermischen Anlage versorgt wird, wobei bei Überschreiten der eingestellten Vorlauftemperatur des Heizmediums aus der solarthermischen Anlage der Zulauf zum solarthermischen Wärmetauscher unterbunden wird, um eine Überhitzung der Raumheizung zu verhindern. Geht man im vorliegenden Fall beispielsweise davon aus, dass die Vorlauftemperatur für die Fußbodenheizung etwa 25° bis 30° C beträgt, so wird z. B. in den Morgenstunden, d. h. unmittelbar nach Sonnenaufgang, die solarthermische Anlage eine Temperatur aufweisen, bzw. das Heizmedium bei einer Temperatur zur Verfügung stehen können, die weit unterhalb der Ist-Temperatur des Warmwasserspeichers liegt. Das durch die solarthermische Anlage bereit gestellte Heizmedium weist allerdings bereits eine Temperatur auf, die geeignet ist, dem solarthermischen Wärmetauscher zugeführt zu werden, der mit dem Rücklauf der Heizungsanlage verbunden ist, so dass der Heizungsanlage und hier insbesondere schlussendlich dem Heizkessel das Heizmedium mit einer Temperatur zugeführt wird, die oberhalb der Rücklauftemperatur unmittelbar aus der Fußbodenheizung liegt, so dass sich aus der Temperaturdifferenz zwischen der Temperatur des Heizmediums aus der Fußbodenheizung im Rücklauf und der Temperatur des Heizmediums im solarthermischen Wärmetauscher eine Ersparnis im Hinblick auf die eingesparte Wärmemenge ergibt. Voraussetzung für ein Einspeisen der solarthermischen Anlage in den Solarwärmetauscher ist natürlich, dass die Temperatur des Heizmediums der solarthermischen Anlage höher ist, als die Rücklauftemperatur des Heizmediums aus der Raumheizung. In dem Moment, wo die solarthermische Anlage in der Lage ist, das Heizmedium mit einer Temperatur zur Verfügung zu stellen, die oberhalb der Ist-Temperatur des Warmwasserspeichers liegt, wird die Zufuhr zum solarthermischen Wärmetauscher abgesperrt und der Weg zum Wärmetauscher im Speicher geöffnet, was zur Folge hat, dass durch die solarthermische Anlage das Warmwasser im Warmwasserwärmespeicher erwärmt wird. Hat der Warmwasserspeicher seine Maximaltemperatur erreicht, dann kann, wenn von der Fußbodenheizung, d. h. den Raumthermostaten, eine weitere Wärmezufuhr angefordert wird, die solarthermische Anlage zumindest partiell wieder den solarthermischen Wärmetauscher mit Energie versorgen.

Anhand der Zeichnungen wird die Erfindung nachstehend beispielhaft näher erläutert.
Fig. 1 zeigt den Stand der Technik;
Fig. 2 zeigt die erfindungsgemäße Kombination zwischen Heizungsanlage und solarthermischer Anlage.

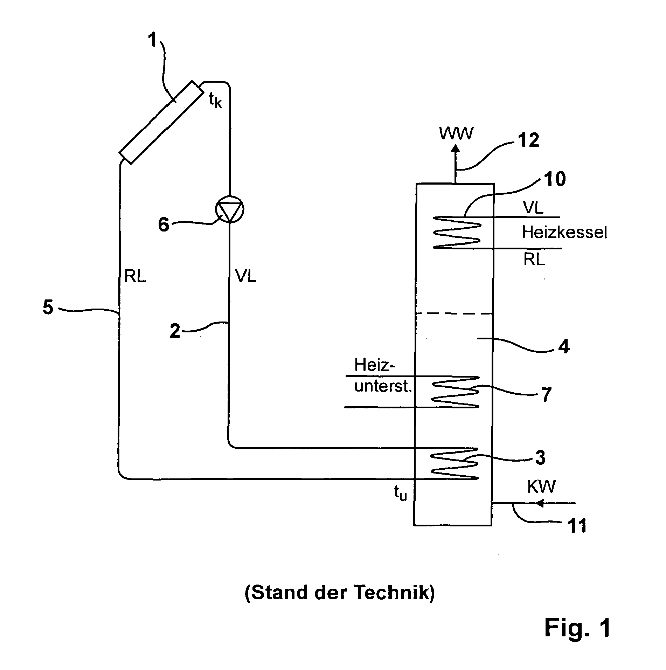

Bei dem Stand der Technik gemäß Fig. 1 ist es so, dass die solarthermische Anlage 1 über den Vorlauf 2 mit dem Wärmetauscher 3 im Warmwasserspeicher 4 in Verbindung steht. Der Rücklauf zur solarthermischen Anlage ist mit 5 bezeichnet. Im Vorlauf 2 ist eine Pumpe 6 angeordnet. In dem Warmwasserspeicher 4 befindet sich darüber hinaus ein weiterer Wärmetauscher 10, der mit dem Heizkessel (nicht dargestellt) in Verbindung steht, und der dafür sorgt, dass das Wasser im Warmwasserspeicher 4 eine bestimmte Temperatur nicht unterschreitet. Ein dritter Wärmetauscher 7 befindet sich im Warmwasserspeicher 4, der mit der Raumheizung, also beispielsweise dem Vorlauf des Heizungskessels in Verbindung steht. Darüber hinaus weist der Warmwasserspeicher 4 einen Kaltwasserzufluss 11 und einen Warmwasserablauf 12 zur Warmwasserversorgung des Gebäudes auf. Eine Steuerung 14 sorgt dafür, dass bei positiver Differenz tₖ < tᵤ im Wege der Ladung des Speichers 4 die Pumpe 6 angesteuert wird. Bei zu geringer solarer Wärme wird über den Wärmetauscher 10 eine Teilmenge des Speicherinhalts für die Warmwasserversorgung nachgeheizt, wobei die Steuerung durch den Heizkessel erfolgt.

Nachteilig ist hierbei, wie dies bereits erwähnt wurde, dass die von der solarthermischen Anlage erzeugte Wärmemenge erst dann abgenommen werden kann, wenn die Temperatur tₖ die Ist-Temperatur tᵤ im Warmwasserspeicher 4 übersteigt.

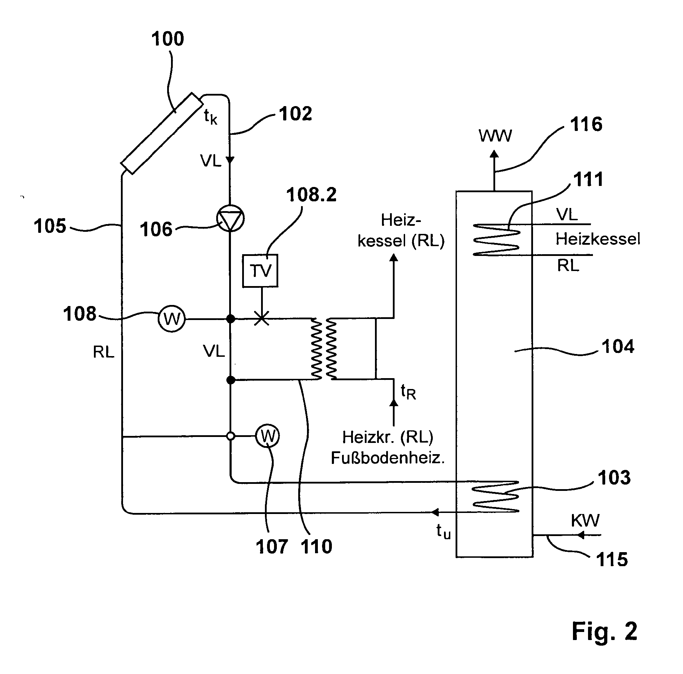

Nach der Erfindung, wie sie in Fig. 2 dargestellt ist, gilt nun Folgendes:
In der gemäß Fig. 2 dargestellten Anlage ist die solarthermische Anlage mit 100 bezeichnet. Die solarthermische Anlage steht über ihren Vorlauf 102 mit Hilfe der Pumpe 106 mit dem Speicherwärmetauscher 103 in dem Warmwasserspeicher 104 in Verbindung. Der Rücklauf ist mit dem Bezugszeichen 105 versehen. Der Warmwasserspeicher 104 wird durch die solarthermische Anlage 100 dann geladen, wenn die Temperatur tₖ im Vorlauf 102 höher ist, als die Temperatur tᵤ im Warmwasserspeicher 104.
In diesem Fall wird ein Zwei-Wege-Ventil 107 geöffnet, und das Zwei-Wege-Ventil 108 geschlossen. Ist hingegen die Temperatur tₖ geringer als die aktuelle Temperatur im Warmwasserspeicher 104, aber höher als die Rücklauftemperatur t_{R} der Raumheizung, z. B. der Fußbodenheizung, dann wird das Zwei-Wege-Ventil 107 geschlossen, und das Zwei-Wege-Ventil 108 geöffnet, womit der Plattenwärmetauscher 110 primärseitig durchströmt wird. Das Thermostatventil 108.2 sorgt für eine Temperaturbegrenzung der Raumheizung, um zu verhindern, dass die Raumheizung überheizt wird. Das heißt, das Thermostatventil 108.2 sorgt dafür, dass nur eine so große Wärmemenge in den solarthermischen Wärmetauscher einströmt, wie die Raumheizung in der Lage ist zu tolerieren. Die Sekundärseite des Plattenwärmetauschers 110 liegt im Rücklauf der Fußbodenheizung der Heizungsanlage vor dem Heizkessel (nicht dargestellt). Es liegt demzufolge eine Systemtrennung vor. Das heißt, dass beispielsweise bei einer Temperatur tₖ von 25° diese Wärmemenge zur Unterstützung des Heizkessels eingesetzt wird, wenn die Rücklauftemperatur unmittelbar aus der Fußbodenheizung geringer ist, als die Temperatur tₖ des Heizmediums aus der solarthermischen Anlage. Allerdings wird bei Überschreiten einer oberen Grenztemperatur des Heizmediums aus der solarthermischen Anlage der Zulauf zum solarthermischen Wärmetauscher durch ein Thermostatventil 108.2 mit Fernfühler unterbunden, wie oben ausgeführt.

Der Warmwasserspeicher 104 verfügt darüber hinaus über einen weiteren Wärmetauscher 111, wobei der Wärmetauscher 111 mit dem Heizkessel der Heizungsanlage in Verbindung steht, wobei der Heizkessel im Wege der Nachheizung dafür sorgt, dass der Warmwasserspeicher 104, wenn die solarthermische Anlage keine Leistung bringt, auf das gewünschte Warmwasser Temperaturniveau gebracht wird. Der Warmwasserspeicher 104 verfügt darüber hinaus über einen Kaltwasserzufluss 115 und einen Warmwasserabfluss 116.

## Patentansprüche

1. Heizungsanlage, umfassend einen Warmwasserspeicher 104, eine Heizeinrichtung, sowie eine solarthermische Anlage (100), wobei die solarthermische Anlage (100) mit dem Warmwasserspeicher (104) durch einen Speicherwärmetauscher (103) in Verbindung steht, und wobei die solarthermische Anlage (100) des Weiteren durch einen solarthermischen Wärmetauscher (110) mit mindestens einem Raumwärmetauscher, z. B. einer Fußbodenheizung, der Heizungsanlage in Verbindung steht.

2. Heizungsanlage nach Anspruch 1,
**dadurch gekennzeichnet,**
**dass** Warmwasserspeicher (104) einen zweiten Wärmetauscher (111) aufweist, der mit der Heizungsanlage gekoppelt ist.

3. Heizungsanlage nach einem der voranstehenden Ansprüche,
**dadurch gekennzeichnet,**
**dass** die Heizungsanlage als Heizeinrichtung einen Heizkessel aufweist.

4. Heizungsanlage nach einem der voranstehenden Ansprüche,
**dadurch gekennzeichnet,**
**dass** der solarthermische Wärmetauscher (110) zwischen der solarthermischen Anlage (100) und dem Raumwärmetauscher als Plattenwärmetauscher ausgebildet ist.

5. Heizungsanlage nach einem der voranstehenden Ansprüche,
**dadurch gekennzeichnet,**
**dass** der solarthermische Wärmetauscher (110) primärseitig in dem Vorlauf (102) der solarthermischen Anlage (100) und sekundärseitig in dem Rücklauf des Raumwärmetauschers der Heizungsanlage, also vor der Heizeinrichtung z. B. dem Heizkessel, angeordnet ist.

6. Heizungsanlage nach einem der voranstehenden Ansprüche,
**dadurch gekennzeichnet,**
**dass** der Raumwärmetauscher als Fußbodenheizung ausgebildet ist.

7. Heizungsanlage nach einem der voranstehenden Ansprüche,
**dadurch gekennzeichnet,**
**dass** der Speicherwärmetauscher (103) in dem Vorlauf (102) der solarthermischen Anlage (100) eingekoppelt ist.

8. Heizungsanlage nach einem der voranstehenden Ansprüche,
**dadurch gekennzeichnet,**
**dass** der Vorlauf zum Speicherwärmetauscher (103) und zum solarthermischen Wärmetauscher (110) absperrbar ist.

9. Heizungsanlage nach einem der voranstehenden Ansprüche,
**dadurch gekennzeichnet,**
**dass** der Plattenwärmetauscher zwei getrennte Kammern zum Wärmeaustauscher aufweist, so dass das Heizmedium der Heizungsanlage getrennt vom Heizmedium der solarthermischen Anlage (100) geführt ist.

10. Steuerungsverfahren für eine Heizungsanlage gemäß einem oder mehrerer der Ansprüche 1 bis 9,
**dadurch gekennzeichnet,**
**dass** bei einer Vorlauftemperatur tₖ der solarthermischen Anlage (100), die unterhalb der Ist-Temperatur tᵤ des Warmwasserspeichers (104) liegt, aber oberhalb der Temperatur im Rücklauf t_{R} der Heizungsanlage liegt, der Zulauf zum Warmwasserspeicher (104) abgesperrt wird, und der Zulauf zum solarthermischen Wärmetauscher (110) mit dem Heizmedium aus der solarthermischen Anlage (110) versorgt wird.

11. Steuerungsverfahren nach Anspruch 10,
**dadurch gekennzeichnet,**
**dass** bei Überschreiten einer oberen Grenztemperatur des Heizmediums aus der solarthermischen Anlage (100) der Zulauf zum solarthermischen Wärmetauscher (110) durch ein Thermostatventil (108.2) mit Fernfühler unterbunden wird.

12. Steuerungsverfahren nach Anspruch 10,
**dadurch gekennzeichnet,**
**dass** nach Erreichen von tₖ = tᵤ der Zulauf zum Warmwasserspeicher (104) unterbunden wird, und das Heizmedium der solarthermischen Anlage (100) zumindest partiell dem solarthermischen Wärmetauscher (110) zugeführt wird, und zwar maximal so lange, bis die eingestellte Raumtemperatur erreicht ist.
